# EUROPEAN PATENT APPLICATION

(11) **EP 4 507 112 A1**
(43) Date of publication of application: **12.02.2025**
(21) Application number: 23878832.7
(22) Date of filing: 31.08.2023
(51) Int. Cl.: H01M 50/531, H01M 50/586, H01M 50/536, H01M 50/528

(54) **BATTERY**

(30) Priority: 21.10.2022 CN 202222792829 U
(71) Applicant: Zhuhai CosMX Battery Co., Ltd., Zhuhai, Guangdong 519180 (CN)
(72) Inventor: ZHOU, Jinyong, Zhuhai, Guangdong 519180 (CN); WEI, Zhida, Zhuhai, Guangdong 519180 (CN); XIE, Jichun, Zhuhai, Guangdong 519180 (CN); LI, Chengbei, Zhuhai, Guangdong 519180 (CN); ZHANG, Hui, Zhuhai, Guangdong 519180 (CN); XI, Yang, Zhuhai, Guangdong 519180 (CN)
(74) Representative: Elzaburu S.L.P.
(86) International application number: PCT/CN2023/116279
(87) International publication number: WO 2024/082837

(57) **Abstract**

The present application provides a battery, relating to the technical field of batteries, and is used for solving the technical problem that a first connector of the battery is easy to deform in a process of battery assembly and installation. The battery includes a housing, a first connector, a first adapter and a supporting block. After connecting the first connector to the housing, the supporting block is correspondingly arranged at the first connector. The supporting block is matched with an accommodating part formed by the first connector so as to provide supporting function for the first connector. The battery provided by the present application has a simple structure, and may avoid deformation of the first connector during the welding of the first adapter and the first connector of the battery.

## Description

The present application claims priority to Chinese Patent Application No. 202222792829.2 filed with China National Intellectual Property Administration on October 21, 2022 and entitled "BATTERY", which is hereby incorporated by reference in its entirety.

### TECHNICAL FIELD

The present application relates to the technical field of batteries, and in particular to a battery.

### BACKGROUND

With the development of new energy technology, batteries are widely used in the fields of energy storage and power. With the popularization of application, the batteries have also derived a variety of structures. In the field of new energy batteries, batteries have a wide range of applications in the market due to their excellent safety performance. Batteries are commonly used electrochemical energy storage apparatus. In conventional battery structures, a first connector is formed by bending thin sheet metal, and has weak mechanical strength. The bent first connector is then welded to the housing of the battery to facilitate welding to the first adapter later.

However, when welding the first adapter to the first connector, it is necessary to apply a certain pressure to compress the first adapter and the first connector tightly, which is easy to cause the deformation of the first connector.

### SUMMARY

The present application provides a battery, so as to solve the technical problem that a first connector of the battery is easy to deform when a first adapter of the battery is welded to the first connector.

The present application provides a battery, which includes:
a housing, including an accommodating recess;
a battery cell, which is located in the accommodating recess and includes a first tab and a second tab;
a first connector, which is arranged in the accommodating recess and includes a first side plate and a back plate, the back plate being connected to the housing;
a first adapter, which is respectively connected to the first tab and the first side plate of the first connector;
a supporting block, which is arranged at one side of the first side plate facing away from the housing.

In the battery of the present application, after connecting the first connector to the housing, the supporting block is correspondingly arranged at the first connector. The supporting block is matched with the first connector, so that the supporting block may provide supporting function for the first connector. Therefore, the battery provided by the present application has a simple structure, which may effectively improve assembly efficiency and reduce the labor cost, thereby solving the technical problem of poor welding due to the deformation of the first connector when welding the first connector to the first adapter, causing the open circuit of the battery and leading to the scrapping of the battery.

In some embodiments, which may include the foregoing embodiment, a projection of the supporting block in a thickness direction of the housing at least partially overlaps with a projection of the first adapter in the thickness direction of the housing, and/or,
the projection of the supporting block in the thickness direction of the housing at least partially overlaps with a projection of the first side plate in the thickness direction of the housing.

In some embodiments, which may include the foregoing embodiments, the first connector further includes a second side plate. The first side plate, the second side plate and the back plate form an accommodating part. The supporting block is arranged in the accommodating part.

In some embodiments, which may include the foregoing embodiments, a surface of the supporting block facing away from the back plate is flush with surfaces of the first and second side plates facing away from the back plate.

In some embodiments, which may include the foregoing embodiments, an inner wall of the first side plate facing the accommodating part and an inner wall of the second side plate facing the accommodating part are both in contact with the supporting block.

In some embodiments, which may include the foregoing embodiments, the first adapter includes an adapter part, a welding part and a connecting part. The connecting part connects the adapter part to the welding part. The adapter part is connected to the first tab. The welding part is connected to the first side plate. A projection of the connecting part in a width direction of the battery at least partially overlaps with a projection of the supporting block in the width direction of the battery.

In some embodiments, which may include the foregoing embodiments, the supporting block includes a first surface facing away from the back plate. The first adapter includes a second surface perpendicular to the welding part. The first surface is arranged to face the second surface.

The second surface is located between the battery cell and the supporting block.

In some embodiments, which may include the foregoing embodiments, the projection of the connecting part in the width direction of the battery completely overlaps with the projection of the supporting block in the width direction of the battery.

In some embodiments, which may include the foregoing embodiments, the first connector is a plate structure, and the welding part of the first adapter is a plate structure.

In some embodiments, which may include the foregoing embodiments, there is a gap between the adapter part and a surface of the supporting block facing away from the back plate.

In some embodiments, which may include the foregoing embodiments, the inner wall of the first side plate is in contact with the supporting block.

In some embodiments, which may include the foregoing embodiments, the supporting block is an injection-molded structural member.

In some embodiments, which may include the foregoing embodiments, the supporting block is provided with a through hole. The housing has a second through hole. The back plate has a third through hole. The through hole, the second through hole, and the third through hole are communicated.

In some embodiments, which may include the foregoing embodiments, a diameter of the second through hole is smaller than a diameter of the third through hole. The diameter of the third through hole is the same as a diameter of the through hole.

In some embodiments, which may include the foregoing embodiments, the battery further includes a reinforcing block. The reinforcing block is connected to an outer surface of the housing.

The reinforcing block has a first through hole. The battery further includes a sealing sheet. The sealing sheet is connected to the reinforcing block and covers the first through hole.

In some embodiments, which may include the foregoing embodiments, the reinforcing block is welded to the housing, and the first connector is arranged corresponding to the reinforcing block.

In some embodiments, which may include the foregoing embodiments, a diameter of the first through hole is the same as the diameter of the second through hole, and the diameter of the third through hole is the same as the diameter of the through hole.

In some embodiments, which may include the foregoing embodiments, the first connector is a negative connecting sheet, the first tab is a negative tab, and the second tab is a positive tab.

In some embodiments, which may include the foregoing embodiments, the first tab and the second tab are located on a same side of the battery cell.

In some embodiments, which may include the foregoing embodiments, the battery further includes a second adapter, a terminal post and an insulating assembly, where the second adapter is connected to the second tab and the terminal post is connected to the second adapter, the insulating assembly includes a first insulator and a second insulator, the first insulator is connected to the housing, the second insulator is arranged corresponding to the first insulator, and the second insulator is connected to the housing.

### BRIEF DESCRIPTION OF DRAWINGS

To describe the technical solutions in the present application or in the prior art more clearly, the following briefly introduces the accompanying drawings needed for describing the embodiments or the prior art. Apparently, the accompanying drawings in the following description illustrate merely some embodiments of the present application, and persons of ordinary skill in the art may still derive other drawings from these accompanying drawings without creative effort.
FIG. 1 is a partially exploded structural schematic diagram of a battery according to an embodiment of the present application.
FIG. 2 is a partially sectional structural schematic diagram of a battery according to an embodiment of the present application.
FIG. 3 is a partially structural schematic diagram of a battery according to an embodiment of the present application.
FIG. 4 is an enlarged schematic diagram of B in FIG. 3.
FIG. 5 is an enlarged schematic diagram of A in FIG. 1.

### Description of reference signs:

1- battery;
10- housing; 10a- accommodating recess; 10b- second through hole; 11-bottom plate; 12- side-wall plate;
20- first connector; 20a-accommodating part; 21- first side plate; 22-second side plate; 23- back plate; 23a- third through hole;
30- first adapter; 30a- second surface; 31- adapter part; 32- welding part; 33- connecting part;
40- supporting block; 40a- through hole; 40b- first surface;
50- reinforcing block; 50a- first through hole;
60- sealing sheet;
70- battery cell; 71- first tab; 72- second tab;
80- cover plate;
90- second adapter;
100- terminal post;
110- insulating assembly; 111- first insulator; 112- second insulator;
120- riveting sheet;
200a- gap; 200b- injection hole.

### DESCRIPTION OF EMBODIMENTS

The following will describe the implementations of the present application clearly with reference to the accompanying drawings and embodiments of the present application. The following detailed description of the embodiments and accompanying drawings are used to illustrate the principle of the application exemplarily, but not to limit the scope of the present application, that is, the present application is not limited to the described embodiments.

In the description of the present application, it should be noted that unless otherwise specified, "a plurality of" means two or more; the terms "upper", "lower", "left", "right", "inner" and "outer" indicate the orientation or positional relationship only for the convenience of describing the present application and simplifying the description, but are not to indicate or imply that the apparatus or elements referred to must have a specific orientation, or be constructed and operated in a specific orientation, thus they should not be understood as limitations of the present application. In addition, the terms "first", "second" and etc. are only used for descriptive objects but cannot be understood as indicating or implying relative importance. "Vertical" is not vertical in the strict sense, but within the allowable range of error. "Parallel" is not parallel in the strict sense, but within the allowable range of error.

Reference to "an embodiment" in the present application means that a specific feature, structure or characteristic described with reference to an embodiment can be included in at least one embodiment of the present application. The appearance of this phrase in various places in the specification does not necessarily refer to the same embodiment, nor is it an independent or alternative embodiment mutually exclusive with other embodiments. It is understood explicitly and implicitly by the skilled in the art that the embodiments described in the present application can be combined with other embodiments.

In the description of the present application, it should also be noted that unless otherwise specified and limited, the terms "install", "connect" and "coupled" should be broadly understood, for example, they can be fixed connection, detachable connection or integrated connection; also can be directly connected or indirectly connected through an intermediary. For persons of ordinary skill in the art, the specific meanings of the above terms in the present application can be understood according to the specific circumstances.

As mentioned in the Background, the first connector is easy to deform when the first adapter of the battery is welded to the first connector in the related art. It was found through research by the inventor, the reason for this problem is that a certain pressure needs to be applied when the first adapter of the battery is welded to the first connector, so as to compress the first adapter and the first connector tightly. The first connector is formed by bending a thin metal sheet, and has weak strength. When the battery is assembled, it is easy to cause deformation of the first connector, which leads to poor welding between the first adapter and the first connector, and thus easily leads to the open circuit of the battery and then leads to the scrapping of the battery. Furthermore, since the first connector is likely to be squeezed and sunk, the first adapter may also sink, which will cause the first adapter to pull the first tab of the battery cell, so that the first tab has a large stress. When the finished product of the battery is subjected to vibration, it is easy for the first tab to be pulled off, which leads to the scrapping of the battery.

Based on the problems found above, the present application provides a battery, which includes a housing, a battery cell, a first connector, a first adapter and a supporting block. After connecting the first connector to the housing, the supporting block is correspondingly arranged at the first connector. The supporting block is matched with an accommodating part formed by the first connector, and thus provides a supporting function for the first connector. In this way, the battery provided by the present application has a simple structure, high assembly efficiency and low working strength, and can avoid the deformation of the first connector when the first adapter of the battery is welded to the first connector.

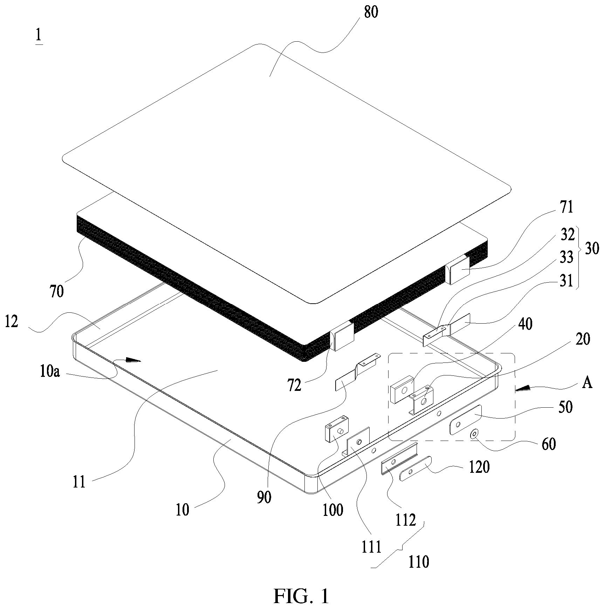

The following will describe the battery of the present application with reference to the embodiments shown in FIGS. 1 to 5.

A battery 1 of the embodiments of the present application may include a lithium ion secondary battery, a lithium sulfur battery or a sodium lithium ion battery, etc., and is not limited in the present application. The battery 1 may be a square battery, and is also not limited in the present application.

Devices in the embodiments of the present application may be mobile devices such as vehicles, ships, small planes and etc. Taking a vehicle as an example, the vehicle of the present application may be a new energy vehicle. The new energy vehicle may be a pure battery electric vehicle, a hybrid vehicle or a range extended vehicle. The battery 1 may be used as a driving power source for vehicles, replacing or partially replacing fuel oil or natural gas to provide driving power for vehicles. Exemplarily, the battery 1 provides electric energy for a driving motor. The driving motor is connected to wheels on the vehicle through a transmission mechanism so as to drive the vehicle to move. Specifically, the battery 1 may be horizontally disposed at the bottom of the vehicle.

Since the battery 1 serve as an electrochemical energy storage apparatus, the combination and installation of the battery 1 is a very important link during the process of assembling the battery 1. Firstly, a first connector 20 of the battery 1 is connected to a housing 10. Secondly, a supporting block 40 is correspondingly arranged at the first connector 20. The supporting block 40 is matched with an accommodating part 20a formed by the first connector 20, to provide a supporting function for the first connector 20. In this way, the deformation resistance of the first connector 20 may be indirectly increased, so as to facilitate the welding and fixing between the first connector 20 and the first adapter 30.

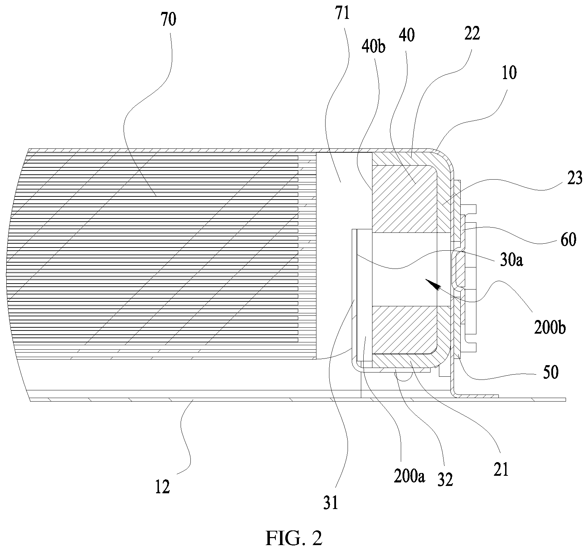

As shown in FIGS. 1 and 2, the battery 1 of the present application includes a housing 10, a battery cell 70, a first connector 20, a first adapter 30 and a supporting block 40. The housing 10 includes an accommodating recess 10a. The battery cell 70 is located in the accommodating recess 10a. The battery cell 70 includes a first tab 71 and a second tab 72. The first connector 20 is arranged in the accommodating recess 10a. The first connector 20 includes a first side plate 21 and a back plate 23. The back plate 23 is connected to the housing 10. The first adapter 30 is respectively connected to the first tab 71 and the first side plate 21 of the first connector 20. The supporting block 40 is arranged on one side of the first side plate 21 facing away from the housing 10.

The first side plate 21 of the first connector 20 is used to provide a supporting surface for welding to the first adapter 30, so as to facilitate the mutual fixing and welding between the first connector 20 and the first adapter 30. A contact surface between the back plate 23 of the first connector 20 and the housing 10 has a large area, which facilitates the welding between the first connector 20 and the housing 10 and is conducive to enhancing the fixing effect between the first connector 20 and the housing 10. The supporting block 40 is used to fill the accommodating part 20a of the first connector 20, thereby providing supporting function for the first connector 20.

In some examples, the first connector 20 may be a negative connecting sheet. The first adaptor 30 is connected to the first tab 71. Exemplarily, the battery cell 70 may be a wound battery cell 70 or a laminated battery cell 70. The first tab 71 may be a negative tab. The second tab 72 may be a positive tab.

In some examples, the first tab 71 and the second tab 72 are located on a same side of the battery cell 70. In a width direction of the battery 1, the first tab 71 and the second tab 72 may be spaced apart. In some examples, the second tab 72 is welded to the battery cell 70. In the battery 1 of the present application, after connecting the first connector 20 to the housing 10, the supporting block 40 is correspondingly arranged at the first connector 20. The supporting block 40 is matched with the first connector 20, so that the supporting block 40 may provide a supporting function for the first connector 20. Therefore, the first connector 20 is not easy to be deformed when stressed, thereby conducive to solving the problem of poor welding due to the deformation of the first connector 20 when welding the first connector 20 to the first adapter 30, which causes the open circuit of the battery 1 and then causes the scrapping of the battery 1.

In some embodiments, as shown in FIGS.1 and 2, a projection of the supporting block 40 in a thickness direction of the housing 10 at least partially overlaps with a projection of the first adapter 30 in the thickness direction of the housing 10, and/or,
the projection of the supporting block 40 in the thickness direction of the housing 10 at least partially overlaps with a projection of the first side plate 21 in the thickness direction of the housing 10.

In some examples, the projection of the supporting block 40 in a thickness direction of the housing 10 completely overlaps with a projection of the first adapter 30 in the thickness direction of the housing 10, and/or,
the projection of the supporting block 40 in the thickness direction of the housing 10 completely overlaps with a projection of the first side plate 21 in the thickness direction of the housing 10.

In some embodiments, as shown in FIGS. 1, 2 and 5, the first connector 20 further includes a second side plate 22. The first side plate 21, the second side plate 22 and the back plate 23 form an accommodating part 20a. The supporting block 40 is arranged in the accommodating part 20a. In the thickness direction of the housing 10, the first side plate 21 and the second side plate 22 are spaced apart. In some embodiments, as shown in FIGS. land 2, a surface of the supporting block 40 facing away from the back plate 23 is flush with surfaces of the first side plate 21 and the second side plate 22 that face away from the back plate 23. The supporting block 40 does not extend beyond the first connector 20, so that an overall structure formed by the supporting block 40 and the first connector 20 may avoid occupying more space, which is conducive to ensuring the battery 1 to have a high energy density.

In some examples, the supporting block 40 may be a plastic material, which is conducive to reducing a weight of the supporting block 40, thus reducing an overall weight of the battery 1.

Exemplarily, the supporting block 40 is an injection-molded structural member. After welding the first connector 20 to the housing 10, the first connector 20 and the housing 10 are partially injection-molded together. The supporting block 40 obtained after the injection molding may provide the supporting function for the first connector 20. The battery 1 of the present application has a simple structure, and the assembly efficiency can be effectively improved by adopting the injection molding filling method, and the cost of manual filling can be reduced.

In some embodiments, as shown in FIGS. 2 to 4, the first adapter 30 includes an adapter part 31, a welding part 32 and a connecting part 33. The connecting part 33 connects the adapter part 31 to the welding part 32, the adapter part 31 is connected to the first tab 71. The welding part 32 is connected to the first side plate 21. A projection of the connecting part 33 in a width direction of the battery 1 at least partially overlaps with a projection of the supporting block 40 in the width direction of the battery 1.

In some examples, the projection of the connecting part 33 in the width direction of the battery 1 completely overlaps with the projection of the supporting block 40 in the width direction of the battery 1.

In some examples, the first side plate 21 of the first connector 20 is a plate structure. The welding part 32 of the first adapter 30 is a plate structure. Exemplarily, the first side plate 21 is rectangular. The welding part 32 is rectangular. A length of a long side of the first side plate 21 is equal to a length of a long side of the welding part 32. A length of a short side of the first side plate 21 is equal to a length of a short side of the welding part 32.

In some embodiments, as shown in FIGS. 1 to 4, the supporting block 40 includes a first surface 40b facing away from the back plate. The first adapter 30 includes a second surface 30a perpendicular to the welding part 32. The first surface 40b is arranged to face the second surface 30a. The welding part 32 does not occupy a space of the accommodating part 20a of the first connector 20 and does not interfere with the position of the supporting block 40. The intersection arrangement between the welding part 32 and the adapter part 31 is conducive to enhancing the welding firmness between the first connector 20 and the first adapter 30.

In some examples, the welding part 32 and the adapter part 31 are arranged perpendicular to each other. After the welding between the welding part 32 and the first side plate 21 is completed, a surface of the adapter part 31 may be parallel to a side of the supporting block 40 facing away from the back plate 23.

In some examples, as shown in FIG. 2, there is a gap 200a between the adapter part 31 and a surface of the supporting block 40 facing away from the back plate 23. After the welding of the welding part 32 to the first side plate 21 is completed, there is the gap 200a between the adapter part 31 and a surface of the supporting block 40 facing away from the back plate 23, so that there is no positional interference between the supporting block 40 and the adapter part 31, allowing the adapter part 31 to have a movable space.

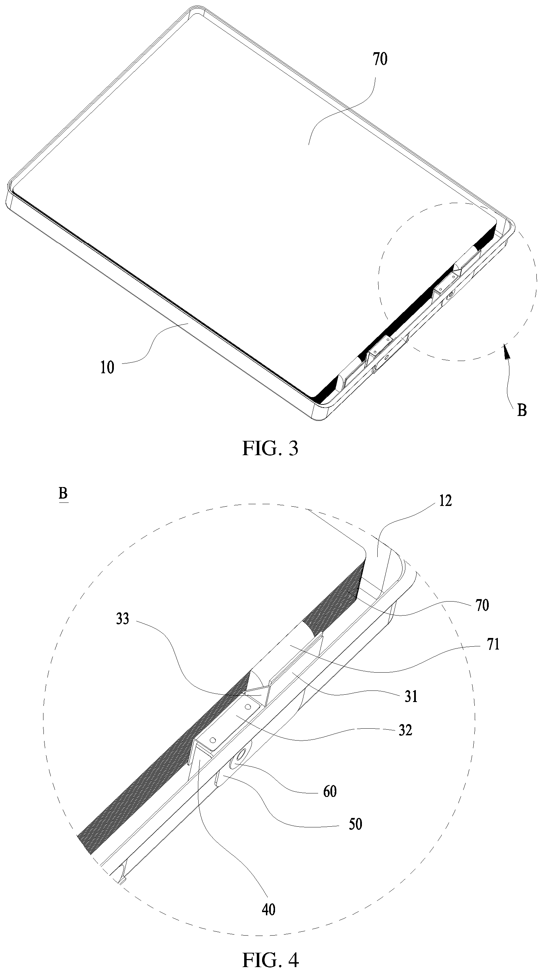

In some embodiments, as shown in FIGS. 2 and 4, the second surface 30a is located between the battery cell 70 and the supporting block 40.

In some embodiments, as shown in FIGS. 2 to 4, an inner wall of the first side plate 21 facing the accommodating part 20a is in contact with the supporting block 40, which is conducive to improving the integrity of the supporting block 40 and the first connector 20, effectively enhancing the supporting strength of the supporting block 40 to the first connector 20.

In some embodiments, as shown in FIGS. 2 to 4, an inner wall of the first side plate 21 facing the accommodating part 20a and an inner wall of the second side plate 22 facing the accommodating part 20a are both in contact with the supporting block 40. The inner wall of the first side plate 21 facing the accommodating part 20a is in contact with one side face of the supporting block 40, while the inner wall of the second side plate 22 facing the accommodating part 20a is in contact with the other side face of the supporting block 40, thereby being conductive to improving the integrity between the supporting block 40 and the first connector 20, to effectively enhance the supporting strength of the supporting block 40 to the first connector 20.

In some embodiments, as shown in FIGS. 1 and 2, the supporting block 40 is provided with a through hole 40a. The housing 10 has a second through hole 10b. The back plate has a third through hole 23a. The second through hole 10b and the third through hole 23a are communicated.

In some examples, a diameter of the second through hole 10b is smaller than diameters of the third through hole 23a and the through hole 40a. The third through hole 23a and the through hole 40a have the same diameter.

In some embodiments, as shown in FIGS. 2 and 4, the battery 1 further includes a reinforcing block 50. The reinforcing block 50 is connected to an outer surface of the housing 10. The reinforcing block 50 is conductive to enhancing the welding firmness between the first connector 20 and the housing 10, effectively solving the deformation of the first connector 20 when being pressed downward, and avoiding the dislocation between the first connector 20 and the housing 10, thus preventing cracks or notches from appearing at the welding position of the first connector 20 and the housing 10.

In some examples, the reinforcing block 50 is welded to the housing 10. The first connector 20 is arranged corresponding to the reinforcing block 50.

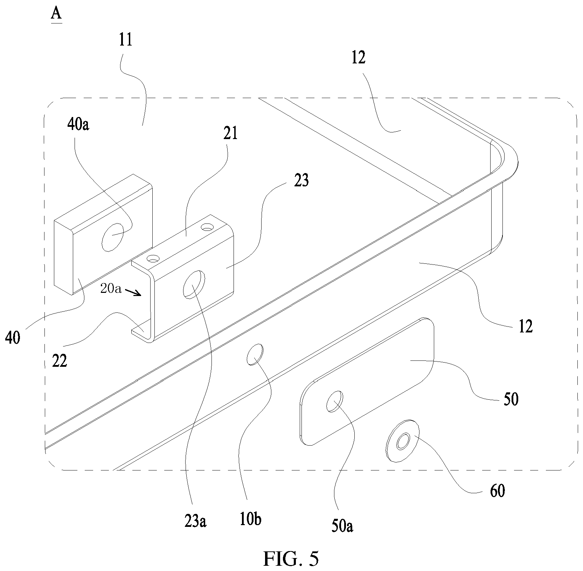

In some embodiments, as shown in FIG. 5, the reinforcing block 50 has a first through hole 50a. The battery 1 further includes a sealing sheet 60. The sealing sheet 60 is connected to the reinforcing block 50 and covers the first through hole 50a. The sealing sheet 60 is connected to the reinforcing block 50. Exemplarily, after the welding of the reinforcing block 50 to the housing 10 and the housing 10 to the back plate 23 is completed, the first through hole 50a, the second through hole 10b, the third through hole 23a and the through hole 40a are communicated to form an injection hole 200b. The sealing sheet 60 may seal the injection hole 200b. Furthermore, centers of the first through hole 50a, the second through hole 10b, the third through hole 23a and the through hole 40a are on a same straight line. An electrolyte can be injected into the battery 1 through the injection hole 200b.

In some examples, the first through hole 50a and the second through hole 10b have the same diameter. The third through hole 23a and the through hole 40a have the same diameter. The diameter of the first through hole 50a is smaller than the diameter of the third through hole 23a.

In some examples, the first through hole 50a, the second through hole 10b, the third through hole 23a and the through hole 40a are circular holes. The first through hole 50a, the second through hole 10b, the third through hole 23a and the through hole 40a have equal area. Centers of the circles of the first through hole 50a, the second through hole 10b, the third through hole 23a and the through hole 40a are on a same straight line.

In some examples, there is a gap 200a between the adapter part 31 and a surface of the supporting block 40 facing away from the back plate 23. The through hole 40a of the supporting block 40 is communicated with the gap 200a between the adapter part 31 and the supporting block 40. When the electrolyte is injected through the injection hole 200b, the electrolyte may pass through the first through hole 50a, the second through hole 10b, the third through hole 23a, the through hole 40a and the gap 200a between the adapter part 31 and the supporting block 40. The adapter part 31 may block the electrolyte, which is conductive to reducing a flow rate of the electrolyte and also avoiding the electrolyte from impacting other structural members in the battery 1.

In some examples, the sealing sheet 60 is a circular sheet. The first through hole 50a of the reinforcing block 50 is a circular hole. An area of the sealing sheet 60 is larger than an opening area of the first through hole 50a. The sealing sheet 60 may be welded to the reinforcing block 50.

In some embodiments, as shown in FIGS. 1 and 3, the battery 1 further includes a battery cell 70. The battery cell 70 is arranged in the accommodating recess 10a.

In some examples, the first adaptor 30 and the first tab 71 are connected by welding. A welding point between the first adapter 30 and the first tab 71 is located outside the first adapter 30, which is conductive to more effective welding between the first adapter 30 and the first tab 71. Exemplarily, the adapter part 31 of the first adapter 30 may be welded to the first tab 71.

In some embodiments, the battery 1 further includes a second adapter 90, a terminal post 100, and an insulating assembly 110. The second adapter 90 is connected to the second tab 72. The terminal post 100 is connected to the second adapter 90. The insulating assembly 110 includes a first insulator 111 and a second insulator 112. The first insulator 111 is connected to the housing 10. The second insulator 112 is arranged corresponding to the first insulator 111. The second insulator 112 is connected to the housing 10.

In some embodiments, the battery 1 further includes a riveting sheet 120. The riveting piece 120 is connected to the second insulator 112.

In some embodiments, as shown in FIGS. 2 and 3, the battery 1 further includes a cover plate 80. The cover plate 80 is connected to the housing 10. The cover plate 80 covers the accommodating recess 10a. The battery cell 70 is arranged in the accommodating recess 10a. An area of the cover plate 80 is larger than a surface area of the battery cell 70. A depth of the accommodating recess 10a is larger than a thickness of the battery cell 70. This facilitates the cover plate 80 to cover the accommodating recess 10a more effectively, which is conductive to improving the overall sealing performance of the battery 1.

Exemplarily, the cover plate 80 may be welded to the housing 10.

Exemplarily, the housing 10 includes a bottom plate 11 and a side-wall plate 12. The bottom plate 11 and the side-wall plate 12 form an accommodation space for accommodating the battery cell 70. The first connector 20 is connected to the side-wall plate 12. The cover plate 80 is welded to the side-wall plate 12.

Exemplarily, a material of the housing 10 and a material of the cover plate 80 may be steel.

Embodiments or implementations in this specification are described in a progressive way, and each embodiment focuses on the difference from other embodiments, and the same and similar parts between the embodiments can be referred to each other.

Finally, it should be noted that the foregoing embodiments are merely intended for describing the technical solutions of the present application rather than limiting the present application. Although the present application has been described in detail with reference to the foregoing embodiments, persons of ordinary skill in the art should understand that they may still make modifications to the technical solutions described in the foregoing embodiments or make equivalent substitutions to some or all technical features therein; and these modifications or substitutions do not make the essence of the corresponding technical solutions depart from the scope of the technical solutions of the embodiments of the present application.

## Claims

1. A battery, comprising:
a housing, comprising an accommodating recess;
a battery cell, located in the accommodating recess and comprising a first tab and a second tab;
a first connector, arranged in the accommodating recess and comprising a first side plate and a back plate, the back plate being connected to the housing;
a first adapter, respectively connected to the first tab and the first side plate of the first connector;
a supporting block, arranged at one side of the first side plate facing away from the housing.

2. The battery according to claim 1, wherein a projection of the supporting block in a thickness direction of the housing at least partially overlaps with a projection of the first adapter in the thickness direction of the housing, and/or,
the projection of the supporting block in the thickness direction of the housing at least partially overlaps with a projection of the first side plate in the thickness direction of the housing.

3. The battery according to claim 1, wherein the first connector further comprises a second side plate, the first side plate, the second side plate and the back plate form an accommodating part, and the supporting block is arranged in the accommodating part.

4. The battery according to claim 3, wherein a surface of the supporting block facing away from the back plate is flush with surfaces of the first side plate and the second side plate that face away from the back plate.

5. The battery according to claim 3, wherein an inner wall of the first side plate facing the accommodating part and an inner wall of the second side plate facing the accommodating part are both in contact with the supporting block.

6. The battery according to claim 1, wherein the first adapter comprises an adapter part, a welding part and a connecting part, the connecting part connects the adapter part to the welding part, and the adapter part is connected to the first tab;
the welding part is connected to the first side plate, a projection of the connecting part in a width direction of the battery at least partially overlaps with a projection of the supporting block in the width direction of the battery.

7. The battery according to claim 6, wherein the supporting block comprises a first surface facing away from the back plate, the first adapter comprises a second surface perpendicular to the welding part, the first surface is arranged to face the second surface, and the second surface is located between the battery cell and the supporting block.

8. The battery according to claim 6, wherein the projection of the connecting part in the width direction of the battery completely overlaps with the projection of the supporting block in the width direction of the battery.

9. The battery according to claim 6, wherein the first connector is a plate structure, and the welding part of the first adapter is a plate structure.

10. The battery according to claim 6, wherein there is a gap between the adapter part and a surface of the supporting block facing away from the back plate.

11. The battery according to claim 1, wherein an inner wall of the first side plate is in contact with the supporting block.

12. The battery according to claim 1, wherein the supporting block is an injection-molded structural member.

13. The battery according to claim 1, wherein the supporting block is provided with a through hole, the housing has a second through hole, and the back plate has a third through hole;
the through hole, the second through hole, and the third through hole are communicated.

14. The battery according to claim 13, wherein a diameter of the second through hole is smaller than a diameter of the third through hole and the diameter of the third through hole is the same as a diameter of the through hole.

15. The battery according to claim 13, wherein the battery further comprises a reinforcing block, and the reinforcing block is connected to an outer surface of the housing; and
the reinforcing block has a first through hole, the battery further comprise a sealing sheet, and the sealing sheet is connected to the reinforcing block and covers the first through hole.

16. The battery according to claim 15, wherein the reinforcing block is welded to the housing, and the first connector is arranged corresponding to the reinforcing block.

17. The battery according to claim 15, wherein a diameter of the first through hole is the same as a diameter of the second through hole, and a diameter of the third through hole is the same as a diameter of the through hole.

18. The battery according to claim 1, wherein the first connector is a negative connecting sheet, the first tab is a negative tab, and the second tab is a positive tab.

19. The battery according to claim 1, wherein the first tab and the second tab are located on a same side of the battery cell.

20. The battery according to claim 1, wherein the battery further comprises a second adapter, a terminal post and an insulating assembly, where the second adapter is connected to the second tab, the terminal post is connected to the second adapter, and the insulating assembly comprises a first insulator and a second insulator, the first insulator is connected to the housing, the second insulator is arranged corresponding to the first insulator, and the second insulator is connected to the housing.
